# EUROPÄISCHE PATENTSCHRIFT

(11) **EP 3 947 995 B1**
(45) Veröffentlichungstag und Bekanntmachung des Hinweises auf die Patenterteilung: **11.10.2023**
(21) Anmeldenummer: 20710466.2
(22) Anmeldetag: 05.03.2020
(51) Int. Cl.: F16C 19/49, F16C 19/30, F16C 19/06, F03D 80/70

(54) **GROSSWÄLZLAGER**
LARGE ROLLING BEARING
PALIERS À ROULEMENT DE GRANDE DIMENSION

(30) Priorität: 26.03.2019 DE 202019101697 U
(43) Veröffentlichungstag der Anmeldung: 09.02.2022
(73) Patentinhaber: Liebherr-Components Biberach GmbH, 88400 Biberach/Riss (DE)
(72) Erfinder: PALMER, Andreas, 88499 Riedlingen (DE); ZELL, Robert, 88433 Schemmerhofen (DE); RUF, Markus, 88339 Bad Waldsee (DE); FUCHS, Michael, 89542 Herbrechtingen (DE)
(74) Vertreter: Thoma, Michael
(86) Internationale Anmeldenummer: PCT/EP2020/055821
(87) Internationale Veröffentlichungsnummer: WO 2020/193097

(56) Entgegenhaltungen:
- WO-A2-2007/112748
- DE-A1- 2 648 144
- DE-A1- 3 104 097
- DE-A1-102007 052 383
- DE-A1-102009 004 991
- DE-A1-102010 027 011
- US-A1- 2012 243 819

## Beschreibung

Die vorliegende Erfindung betrifft ein Wälzlager, insbesondere ein mittenfreies Großwälzlager, mit zwei konzentrischen Laufringen, von denen ein Laufring eine zum anderen Laufring hin offene Nut und der andere Laufring einen in die genannte Nut eingreifenden Nasenring besitzt, wobei der Nasenring an der Nut durch zumindest zwei Axiallager und zumindest ein Radiallager abgestützt ist, wobei die genannten Axiallager als Rollenlager ausgebildet sind.

Ein solches Großwälzlager zeigt beispielsweise die Schrift WO 2007/112748 A2, wobei dort als Axiallager zwei Rollenlager vorgesehen sind und die Radiallager oberhalb und unterhalb der genannten zwei Axiallager vorgesehen sein sollen, um die Wartung des Lagers zu vereinfachen. Ferner ist aus der Schrift DE 10 2007 052 383 A1 ein Großwälzlager bekannt, das zwei Schrägkugellager zum Abfangen von Axialkräften und ein weiteres Radialkugellager zum Abfangen von Radialkräften besitzt, das zwischen den beiden Schrägkugellagern angeordnet sein soll. Aus der DE 10 2010 027 011 A1 , die die Merkmale des Oberbegriffs von Anspruch 1 offenbart, ist ferner ein Wälzlager zur Rotorblatt- oder Turmlagerung für eine Windkraftanlage bekannt, bei dem ein nasenförmiger Ring des einen Lagerrings mittels zweier gegenüberliegender Axiallager in Form von Zylinderrollenlagern und durch zwei Radiallager in Form von zwei Kugellagern abgestützt ist. Die US 2012/0243819 A1 zeigt ein ähnliches Wälzlager für die Rotornabe einer Windkraftanlage, wobei ein nasenförmiger Vorsprung des Innenrings mittels zweier gegenüberliegender Axiallager in Form von Zylinderrollenlagern und ein Radiallager in Form eines Kugellagers am Außenring abgestützt ist.

Bei Großwälzlagern für spezielle Einsatzzwecke wirken bisweilen beträchtliche Biegemomente und Kippkräfte auf die Lagerringe, die zu Verwindungen und einem Winkelversatz der Laufringe zueinander führen können, so dass vorzeitiger Verschleiß im Bereich der Laufringe und Wälzkörper eintritt. Solche Großwälzlager können Maße von mehreren Metern im Durchmesser aufweisen und bspw. an Kranen eingesetzt werden, um bspw. den Abstützmast eines Schiffskrans oder Hafenkrans drehbar zu lagern und abzustützen, wobei hier nicht nur vertikale Kräfte abzufangen sind, sondern auch Biegemomente bzw. Kippbelastungen aufzufangen sind. Ebenfalls großen Biegemomenten und wechselnden Belastungen unterliegen Gondel- und Blattlager von Windkraftanlagen, mit denen die Gondel auf dem Turm der Windkraftanlage bzw. die Rotorblätter an der Rotornabe verstellbar gelagert werden.

Die Verwindungs- und Kippproblematik wird dabei noch verschärft, wenn die Mitte bzw. das Zentrum des Lagers auszusparen ist, um das abzustützende Bauteil, bspw. den genannten Kranstützmast oder andere Elemente, durch das Lager hindurchtreten zu lassen, bspw. um am hindurchtretenden Teil einen Drehantrieb anbringen zu können. Die Lagerringe eines solchen mittenfreien Großwälzlagers können aus Platzgründen insbesondere in radialer Richtung nicht beliebig groß bauen, so dass die erreichbaren Flächenträgheitsmomente der Laufringe begrenzt sind.

Oft stehen solche Großwälzlager bspw. bei Verwendung als Kranturm- oder Kranmastlager oder Rotorblattlager zum Verstellen des Pitchwinkels der Rotorblätter von Windkraftanlagen einen großen Teil ihrer Betriebs- bzw. Lebenszeit still, werden dabei aber dennoch hohen Lasten unterworfen. Durch den hohen Anteil an Stillstandszeiten bei trotzdem hohen Lasten ist es nicht ganz einfach, ermüdungsbedingte Verformungen und Oberflächenbeschädigungen der Laufbahnen und Wälzkörper dauerhaft zu vermeiden und ein ruckfreies Anfahren bzw. Andrehen aus dem Stillstand zu gewährleisten, zumal die Drehgeschwindigkeiten recht niedrig sind. Um die genannten hohen Lasten im Stillstand ohne bleibende Verformungen an den Laufbahnen und/oder den Wälzkörpern abtragen zu können, gleichwohl aber ein ruckfreies Anfahren aus dem Stillstand zu gewährleisten, werden gerne Zylinderrollenlager mit recht großen Zylinderdurchmessern verwendet, die im Gegensatz zu Nadellagern, die sehr kleine Wälzkörperdurchmesser besitzen, oder zu Kugellagern eine gewisse Elastizität zeigen, die Lasten besser verteilen und kleinere Flächenpressungen erzielen können. Allerdings kommt es bei solchen Zylinderrollenlagern mit recht großen Zylinderdurchmessern zu Platzproblemen, da solche Zylinderrollenlager recht groß bauen.

Ein Großwälzlager der eingangs genannten Art zeigt bspw. die Schrift EP 20 92 204 B1, gemäß der der Nasenring des einen Laufrings durch zwei gegenüberliegende Axiallager und zwei gegenüberliegende Radiallager in der Nut des anderen Laufrings eingespannt sein soll, wobei die genannten gegenüberliegenden Axiallager und Radiallager unerwünschte Verformungen des Nasenringes verhindern und eine Ablösung der Laufringe in radialer Richtung vermeiden sollen. Ein ähnliches Großwälzlager und dessen Einbausituation am Stützmast eines Schiffkrans zeigt die Schrift WO 2008/088 213 A2. Während die genannten Schriften sich im Wesentlichen mit der Problematik des Ablösens der Radiallager in Folge von Verwindungen der Laufringe befassen und ein solches Lupfen der Radiallager durch das Einspannen des Nasenrings von gegenüberliegenden Mantelflächenseiten her vermeiden wollen, kommt es indes immer noch zu Verkantungen und Verwindungen im Bereich der Axiallager.

Üblicherweise machen die vertikalen Kranbelastungen und die entsprechenden Reaktionskräfte in der Kranmastlagerung immer noch einen großen bzw. beträchtlichen Teil der Drehlagerbelastung aus, so dass üblicherweise das untere Axiallager, das die vertikalen Kranlasten abfangen muss, in Form eines tragkräftigen Zylinderrollenlagers ausgebildet ist, dessen Zylinderrollen eine relativ große Zylinderrollenbreite besitzen, um eine ausreichend große Berührungslinie zu haben und die Flächenpressungen erträglich zu halten. Andererseits reagieren solche breiten Zylinderrollenlager kritisch auf Verkippungen bzw. Schiefstellungen der Laufbahnen zueinander, da hier sehr rasch nur noch ein sehr kleiner Teil der Zylinderrollen tatsächlich trägt. Insofern wurde bereits vorgeschlagen, die Anzahl der verwendeten Lagerbaugruppen zu erhöhen, um eine weitere, noch stabilere Abstützung des Nasenrings zu erzielen. Beispielsweise schlägt die Schrift WO 2015/055317 A2 die Verwendung von drei Axiallagern vor, von denen zwei auf einer Nasenringseite und das dritte auf der gegenüberliegenden Nasenringseite angeordnet sind.

Eine besondere Beanspruchung und insofern eine nochmalige Verschärfung der Verschleißbelastung tritt bei solchen Großwälzlagern dann auf, wenn sie nicht als kontinuierlich drehende Lager, sondern als Schwenklager eingesetzt werden, die oft über einen längeren Zeitraum in derselben Drehstellung verharren und nur sporadisch bzw. in größeren Intervallen ein Stück weit verdreht werden, und dabei trotzdem, insbesondere bei Rotorplattlagern von Windenergieanlagen, d.h. trotz Stillstand mit wechselnden, äußeren Lasten beaufschlagt werden. Solche wechselnden äußeren Lasten auf das stillstehende bzw. sich nicht drehende Lager entstehen beispielsweise durch die Drehung des Rotors einer Windenergieanlage, bei der die Lager zyklisch hängend und wieder stehend gelagert sind und zyklisch weiter oben stärkeren und weiter unten schwächeren Windlasten ausgesetzt sind, oder generell duch wechselnde Windstärken. Solche wechselnden Momente und Kräfte führen aufgrund elastischer Verformungen von Lager und Anschlussstruktur zu Relativbewegungen zwischen Wälzkörper und Laufbahn, die über einen längeren Zeitraum zu Verschleiß der Lagerlaufbahnen und der Wälzkörper führen können. Wohlgemerkt treten solche Relativbewegungen zwischen Wälzkörper und Laufbahn auf, obwohl sich das Lager nicht dreht, was zu einer verschärften Verschleißbeanspruchung führt, da die Relativbewegungen oft nicht in der vorgesehenen Bewegungsrichtung erfolgen.

Insbesondere können solche durch Lagerverformungen bedingte Relativbewegungen die Rollenkörper wie beispielsweise Zylinderrollen oder Kegelrollen längs der Rollenachse auf den Laufbahnen verschieben, so dass sich die Rolle entlang ihrer Berührungslinie zur Laufbahn in die Laufbahn sozusagen eingraben kann.

Hinzu kommt, dass die elastische Verformung der Lagerringe außerdem eine Verkippung zwischen den an einen Wälzkörper angrenzenden Laufbahnen bewirken kann, was zu einem ungleichmäßigen Tragen der Rollenkörper entlang ihres Linienkontaktes führt und die genannte Verschleißproblematik nochmals erhöht.

Um den Lagerverschleiß in den Griff zu bekommen, wurde daher bislang versucht, die Lagerkonstruktion so zu versteifen, dass die genannten Verformungen und Verkippungen nicht auftreten bzw. stark reduziert werden. Im Wesentlichen wurde dies dadurch erzielt, dass die Lager einschließlich der Rollenkörper ausreichend groß dimensioniert wurden und gleichzeitig relativ viele Wälzlagerreihen eingesetzt wurden, um den Nasenring verformungsfrei einzuspannen bzw. so zu halten, dass er Verformungen widersteht. Durch immer größere und immer mehr Wälzlagerreihen kommt es jedoch zu sehr großem Platzbedarf und hohem Lagergewicht, was bei verschiedenen platzbeengten Einsatzfällen nicht akzeptabel ist, insbesondere bei der Blattlagerung der Rotorblätter von Windkraftanlagen.

Der vorliegenden Erfindung liegt daher die Aufgabe zugrunde, ein verbessertes Wälzlager der eingangs genannten Art zu schaffen, das Nachteile des Standes der Technik vermeidet und Letzteren in vorteilhafter Weise weiterbildet. Insbesondere soll ein mittenfreies Großwälzlager geschaffen werden, das trotz kompakter und leichter Bauweise unempfindlicher gegenüber Verschleiß im Stillstand ist.

Erfindungsgemäß wird die genannte Aufgabe durch ein Wälzlager gemäß Anspruch 1 sowie eine Windkraftanlage gemäß Anspruch 14 gelöst. Bevorzugte Ausgestaltungen der Erfindung sind Gegenstand der abhängigen Ansprüche.

Es wird also vorgeschlagen, zumindest die Radiallager unempfindlicher gegenüber multiaxialen Mikrobewegungen aufgrund von elastischen Verformungen der Lagerringe und der Anschlusskonstruktion bei Lagerstillstand zu machen. Erfindungsgemäß werden sämtliche Radiallager als Kugellager ausgebildet. Überraschenderweise kann eine erhöhte Verschleißfestigkeit nicht durch besonders hohe Tragfähigkeiten im Wälzbetrieb, wie sie Zylinder oder Kegellager zeigen, erreicht werden, sondern durch die Verwendung von Kugeln als Wälzkörper, die auch im Stillstand des Lagers bei Relativbewegungen, die von der bestimmungsgemäßen Bewegungsrichtung der Wälzkörper auf den Lagerbahnen abweichen, abrollen können. Dementsprechend sind die als Kugellager ausgebildeten Radiallager im Vergleich zu Rollen wie Zylindern oder Kegeln unempfindlicher, weil ihre kugelförmigen Wälzkörper in jeder Bewegungsrichtung abrollen und nicht wie Rollen längs einer Berührungslinie verschoben werden können und sich dabei eingraben. Zudem können Kugelbahnen eine Verkippung zwischen den an einen Wälzkörper angrenzenden Laufbahnen sehr viel besser ertragen als Rollenbahnen, die zu ungleichmäßigem Tragen entlang des Linienkontaktes neigen, wenn solche Verkippungen auftreten.

Gemäß der Erfindung sind dabei nur die Radiallager als Kugellager ausgebildet, während die Axiallager als Rollenlager in Form von Zylinderrollenlagern und/oder Kegellagern ausgebildet sein können. Der Stillstandsverschleiß, der bei stillstehenden Lagern unter wechselnden Belastungen entsteht, tritt vorrangig an den Radiallagern auf, so dass es ausreicht, die Radiallager als Kugellager auszubilden, während die Axiallager Rollenlager bleiben können.

Aufgrund der erhöhten Verschleißfestigkeit gegen Stillstandsverschleiß kann das Wälzlager mit nur drei Lagern, nämlich zwei Axiallagern und einem Radiallager auskommen. In Weiterbildung der Erfindung ist genau ein Radiallager und sind genau zwei Axiallager vorgesehen.

Das genannte als Kugellager ausgebildete Radiallager kann dabei einreihig, ggf. aber auch zweireihig oder mehrreihig ausgebildet sein. Insbesondere ist ein einreihiges Kugellager als einziges Radiallager vorgesehen.

Die beiden Axiallager können ebenfalls ein-, zwei- oder mehrreihig ausgebildet sein. In vorteilhafter Weiterbildung der Erfindung sind genau zwei jeweils einreihig ausgebildete Axiallager vorgesehen.

Durch nur drei Lager in Form zweier Axiallager und eines Radiallagers baut das Wälzlager insgesamt leicht und kompakt.

Um nochmals kompakter zu bauen, können in Weiterbildung der Erfindung die Kugelbahnen des Radialkugellagers kleiner ausgebildet werden als die Laufbahnen der Axialrollenlager. Insbesondere kann ein Kugeldurchmesser des Radialkugellagers kleiner bemessen sein als ein Rollendurchmesser der Rollen der beiden Axiallager. In Weiterbildung der Erfindung kann der Kugeldurchmesser des Radialkugellagers etwa 30% bis 85% oder 40% bis 60% des Rollendurchmessers der Axiallager betragen. Sind als Axiallager keine Zylinderrollenlager, sondern Kegelrollenlager vorgesehen, kann mit dem genannten Rollendurchmesser der Durchmesser der Kegelkörper in deren Mitte gemeint sein, also der mittlere Kegeldurchmesser. Trotz verkleinertem Kugeldurchmesser lassen sich die auftretenden Radialkräfte in ausreichender Weise abtragen, da die Kugeln bei ihrer Dimensionierung nicht das Kipp- bzw. Umfallproblem von Rollen berücksichtigen müssen. Bei ungünstigen Verformungszuständen neigen nämlich Rollen in Radialbahnen zum Kippen bzw. Umfallen, weshalb die Rollen in Radialbahnen oft größer dimensioniert sind als sie durch Lebensdauerberechnung an sich dimensioniert sein müssten. Bei Kugeln in Radialbahnen tritt dieses Problem nicht auf, sodass die Kugeln an dieser Stelle rein auf Lebensdauer dimensioniert werden können. Hierdurch kann eine vergleichsweise kleinere Dimensionierung der Kugeln und Kugelbahnen erfolgen, wodurch ein Optimierungspotenzial hinsichtlich Bauvolumen des Großwälzlagers erzielt wird.

Gemäß der Erfindung sind die Radialbahnen des Radiallagers bereits bei der Montage vorgespannt. Die Kugeln des Radiallagers werden vorgespannt eingebaut, indem das im unverformten Zustand der beiden Laufringe vorhandene Spaltmaß zwischen den Kugellaufbahnen und/oder die Krümmung der Kugellaufbahnen an sich zu klein für die Kugelkörper des Kugellagers bemessen werden und eine elastische Verformung bzw. Vorspannung der Kugelkörper und der Laufbahnen bzw. Laufringe eintritt, wenn das Lager montiert wird. Die Kugelkörper und/oder die Kugelbahnen des Radialkugellagers können bereits im lastfreien, d.h. frei von äußeren, aus der Anschlußkonstruktion eingeleiteten Lasten, durch den vorgespannten Einbau leicht verformt sein.

Durch eine solche Vorspannung des Radialkugellagers wird das Lager nochmals unempfindlicher gegenüber elastischen Verformungen und gegenüber Verkippen aufgrund von wechselnden äußeren Lasten wie sie beispielsweise bei Blattlagern von Windkraftanlagen in Form von mittenfreien Großwälzlagern gerne auftreten.

Die genannte Vorspannung kann eine Radialvorspannung sein.

Kugelbahnen des Radialkugellagers können dabei in Form einer Zweipunktkontaktbahn oder in Form einer Vierpunktkontaktbahn ausgebildet sein, wobei auch Mischformen möglich sind, bei denen eine Bahn als Zweipunktkontaktbahn und die andere Bahn als Vierpunktkontaktbahn ausgebildet ist.

Die beiden Axiallager können in Form von Zylinderrollenlager ausgebildet sein oder in Form von Kegelrollenlagern ausgebildet sein, wobei auch hier Mischformen möglich sind, sodass eines der Axiallager ein Kegelrollenlager und das andere Axiallager ein Zylinderrollenlager ist. Insbesondere können aber beide Axiallager als Zylinderrollenlager ausgebildet sein oder beide Axiallager als Kegelrollenlager ausgebildet sein, wobei in diesem Fall eine X- oder O-Anordnung der Kegellager vorgesehen sein kann.

Unabhängig von der Ausbildung der Wälzkörper der Axiallager können die Axialbahnen unter einem gewissen Winkel geneigt angestellt sein, insbesondere gegenüber einer zur Drehachse des Lagers senkrechten Ebene spitzwinklig angestellt sein. Insbesondere können die Axiallaufbahnen aber auch parallel zu einer Ebene senkrecht zur Lagerachse sein.

In Weiterbildung der Erfindung können die beiden Axiallager auf gegenüberliegenden Seiten des Nasenrings angeordnet sein, um den Nasenring in entgegengesetzte Richtungen in der Nut abzustützen.

Unabhängig hiervon sind die beiden Axiallager in zwei voneinander beabstandeten Ebenen angeordnet, die sich jeweils senkrecht zur Achse des Lagers erstrecken können. Das Radiallager wird dabei vorteilhafterweise zwischen den beiden genannten Ebenen angeordnet, in denen die Axiallager positioniert sind. Mit anderen Worten wird das Radiallager bei einer Blickrichtung in Radialrichtung zwischen den beiden Axiallagern angeordnet, insbesondere etwa mittig. Betrachtet man das Lager in einem Längsschnitt, kann das eine Axiallager oberhalb des Radiallagers und das andere Axiallager unterhalb des Radiallagers liegen.

In vorteilhafter Weiterbildung der Erfindung können die beiden Axiallager zumindest näherungsweise denselben Laufbahndurchmesser besitzen oder sich zumindest überdecken, wenn das Wälzlager in einer Blickrichtung parallel zur Lagerdrehachse betrachtet wird.

Das Radiallager besitzt vorteilhafterweise einen Laufbahndurchmesser, der größer ist als der Laufbahndurchmesser aller Axiallager oder kleiner ist als der Laufbahndurchmesser aller Axiallager, sodass das Radiallager gegenüber den Axiallagern radial versetzt ist.

Die Erfindung wird nachfolgend anhand eines bevorzugten Ausführungsbeispiels und zugehöriger Zeichnungen näher erläutert. In den Zeichnungen zeigen:

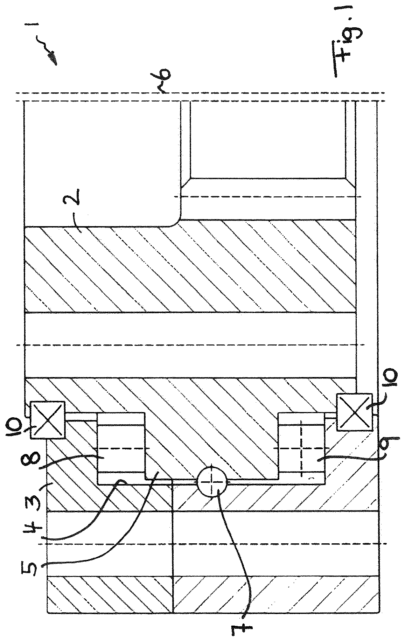

- Fig. 1:: einen Längshalbschnitt eines mittenfreien Großwälzlagers nach einer vorteilhaften Ausführung der Erfindung, gemäß der die beiden Laufringe durch zwei Axiallager in Form von Zylinderrollenlagern und ein Radiallager in Form eines Kugellagers gegeneinander abgestützt sind.

Wie Fig. 1 zeigt, kann das Wälzlager 1 zwei Laufringe 2 und 3 umfassen, von denen der eine Laufring 2 einen Innenring und der andere Laufring 3 einen Außenring bildet. Der genannte Innenring 2 kann einen kleineren Innendurchmesser als der Außenring 3 besitzen und/oder der Außenring 3 kann einen größeren Außendurchmesser als der genannte Innenring 2 besitzen.

Der eine Laufring 3, vorzugsweise der Außenring, kann eine zum anderen Laufring 2, vorzugsweise zum Innenring hin, eine offene Nut 4 besitzen, in die der andere Laufring 2 mit einem daran vorgesehenen Nasenring 5 unter Bildung eines Spalts bzw. mit allseitigem Abstand eingreift. Die genannte Nut 4 kann dabei vorteilhafterweise den Nasenring 5 von vier Seiten her umgreifen, und zwar an zwei gegenüberliegenden Manteflächenseiten und an zwei gegenüberliegenden Stirnflächenseiten des genannten Nasenrings 5.

Die genannte Nut 4 kann hierbei eine - grob gesprochen - U-förmige Bodenkontur umfassen, bei der der Nutboden - gemäß Fig. 1 rechts und links - von zwei Lagerringschenkeln umgriffen ist. Ferner kann die genannte Nut 4 auf einer dem Nutboden gegenüberliegenden Seite einen quer vorspringenden Fortsatz 4a besitzen, der den Nasenring 5 auf einer dem Nutboden gegenüberliegenden Seite stirnseitig umgreift. Insgesamt kann die genannte Nut 4 hinterschnitten ausgebildet sein. Um den Nasenring 5 in die genannte Nut 4 einsetzen zu können, kann der die Nut 4 aufweisende Laufring 2 aus einem Tragring 6 und einem darauf aufsetzbaren Haltering 7 zusammengesetzt sein, vgl. Fig. 1.

Der genannte Nasenring 5 kann dabei, wie Figur 1 zeigt, gegenüber der Nut durch zwei Axiallager 8 und 9 sowie durch ein Radiallager 7 abgestützt sein. Vorteilhafterweise sind dabei die beiden Axiallager 8, 9 auf gegenüberliegenden Nasenringstirnseiten angeordnet. Das Radiallager 7 kann an einer Außenumfangsseite des genannten Nasenrings 5 angeordnet sein.

Sowohl das Radiallager 7 als auch die beiden Axiallager 8 und 9 können in dem insgesamt etwa U-förmigen Spalt angeordnet sein, der sich zwischen der Nut und dem darin eintauchenden Nasenring 5 ergibt.

Wie Figur 1 zeigt, sind die beiden Axiallager 8 und 9 als Rollenlager ausgebildet, wobei die Wälzkörper der Axiallager 8 und 9 beispielsweise Zylinderrollen sein können. Wie eingangs erwähnt, können aber auch Kegelrollenlager vorgesehen sein.

In der gezeichneten Ausführung sind einreihige Zylinderrollenlager als Axiallager 8 und 9 vorgesehen. Es könnten aber auch zwei- oder mehrreihige Rollenlager als Axiallager 8 oder als Axiallager 9 vorgesehen sein, wobei bei mehrreihiger Ausführung die Laufbahnen der Axiallager 8, 9 für die mehreren Reihen versetzt zueinander bzw. zueinander abgesetzt sein können.

Das Radiallager 7 ist als Kugellager ausgebildet, vgl. Figur 1.

Der Kugeldurchmesser der Kugeln des Radiallagers 7 ist dabei vorteilhafterweise signifikant kleiner als der Rollendurchmesser der zylindrischen oder kegelförmigen Wälzkörper der beiden Axiallager 8 und 9.

Wie eingangs erwähnt, wird das Radiallager 7 unter Vorspannung montiert.

Wie Figur 1 zeigt, können die beiden Radiallager 7 im Wesentlichen denselben Laufbahndurchmesser besitzen. Betrachtet man das Wälzlager 1 in Richtung seiner Lagerdrehachse 6 - also in axialer Richtung - überdecken sich die beiden Axiallager 8 und 9 zumindest teilweise, insbesondere auch vollständig.

Das Radiallager 7 besitzt einen Laufbahndurchmesser, der größer oder kleiner ist als der Laufbahndurchmesser der Axiallager 8 und 9, sodass das Radiallager 7 in radialer Richtung versetzt gegenüber den beiden Axiallagern 8 und 9 angeordnet ist.

Wie Figur 1 zeigt, ist das Radiallager 7 etwa mittig zwischen den beiden Axiallagern 8 und 9 angeordnet, insbesondere etwa mittig zwischen den beiden Ebenen, in denen die beiden Axiallager 8 und 9 angeordnet sind, welche Ebenen sich senkrecht zur Lagerdrehachse 6 erstrecken.

Wie Figur 1 zeigt, können die beiden Axiallager 8 und 9 zueinander identisch ausgebildet sein, also beispielsweise jeweils Zylinderrollenlager mit demselben Zylinderdurchmesser sein. Alternativ können auch zueinander identische Kegelrollenlager verwendet werden. Weiterhin alternativ können aber auch unterschiedlich ausgebildete Axiallager 8 und 9 Verwendung finden.

Der Lagerspalt zwischen dem Nasenring 5 und der Nut 4 kann durch zwei Rotationsdichtungen 10 abgedichtet sein, um das Eindringen von Schmutz oder das Auslaufen von Schmierstoff zu verhindern.

Wie Figur 1 zeigt, kann einer der beiden Laufringe 2, 3 mit einer Verzahnung 11 versehen sein, beispielsweise der Innenring 2, um über einen geeigneten Drehantrieb beispielsweise umfassend ein antreibbares Ritzel die beiden Laufringe zueinander verdrehen zu können.

Zumindest einer der beiden Laufringe 2 und 3 kann segmentiert ausgebildet sein. Insbesondere kann der die Nut 4 aufweisende Laufring, insbesondere der Außenring 3 geteilt ausgebildet sein, um den Nasenring 5 in einfacher Weise in der Nut 4 montieren zu können.

## Patentansprüche

1. Wälzlager, insbesondere mittenfreies Großwälzlager, mit zwei konzentrischen Laufringen (2, 3), von denen ein Laufring (3) eine zum anderen Laufring (2) hin offene Nut (4) und der andere Laufring (2) einen in die genannte Nut (4) eingreifenden Nasenring (5) besitzt, wobei der Nasenring (5) an der Nut (4) durch zumindest zwei Axiallager (8, 9) und zumindest ein Radiallager (7) abgestützt ist, wobei die genannten Axiallager (8, 9) als Rollenlager in Form vom Zylinderrollen- und/oder Kegellagern ausgebildet sind und in zwei voneinander beabstandeten Ebenen, die sich senkrecht zur Lagerdrehachse (6) erstrecken, angeordnet sind, zwischen welchen Ebenen das zumindest eine Radiallager (7) angeordnet ist, wobei alle Radiallager (7) als Kugellager ausgebildet sind, **dadurch gekennzeichnet, dass** das zumindest eine Radiallager (7) unter radialer Vorspannung der Kugelbahnen und Kugeln des Kugellagers montiert ist.

2. Wälzlager nach dem vorhergehenden Anspruch, wobei genau zwei Axiallager (8, 9) und genau ein Radiallager (7) vorgesehen sind.

3. Wälzlager nach einem der vorhergehenden Ansprüche, wobei ein Kugeldurchmesser des Radiallagers (7) kleiner ist als ein Rollendurchmesser der Axiallager (8, 9), wobei der Kugeldurchmesser etwa 30% bis 85% oder 40$ bis 60% des Rollendurchmessers beträgt.

4. Wälzlager nach einem der vorhergehenden Ansprüche, wobei das zumindest eine Radiallager (7) mittig zwischen den genannten zwei voneinander beabstandeten Ebenen angeordnet ist, in welchen die zwei Axiallager (8, 9) angeordnet sind.

5. Wälzlager nach einem der vorhergehenden Ansprüche, wobei die Axiallager (8, 9) auf gegenüberliegenden Stirnseiten des Nasenrings (5) angeordnet sind und das Radiallager (7) auf einer Außenmantelfläche des Nasenrings (5) zwischen dessen Stirnseiten angeordnet ist.

6. Wälzlager nach einem der vorhergehenden Ansprüche, wobei die Axiallager (8, 9) bei Betrachtung des Wälzlagers (1) in Richtung dessen Lagerdrehachse (6) einander überdecken, wobei die genannten Axiallager (8, 9) insbesondere gleiche Laufbahndurchmesser besitzen.

7. Wälzlager nach einem der vorhergehenden Ansprüche, wobei das Radiallager (7) einen Laufbahndurchmesser besitzt, der größer oder kleiner ist als alle Laufbahndurchmesser der Axiallager (8, 9).

8. Wälzlager nach einem der vorhergehenden Ansprüche, wobei die Axiallager (8, 9) zueinander identisch ausgebildet sind, insbesondere Wälzkörper mit gleichem Durchmesser und gleicher Breite besitzen.

9. Wälzlager nach einem der vorhergehenden Ansprüche, wobei die Axiallager (8, 9) jeweils einreihig als Zylinderrollenlager ausgebildet sind.

10. Wälzlager nach einem der vorhergehenden Ansprüche, wobei das Radiallager (7) einreihig ausgebildet ist.

11. Wälzlager nach einem der vorhergehenden Ansprüche, wobei einer der Laufringe (2, 3) mit einer Verzahnung zum Eingriff mit einem Drehantriebsritzel ausgebildet ist.

12. Wälzlager nach einem der vorhergehenden Ansprüche, wobei der die Nut (4) aufweisende Laufring (3) geteilt ausgebildet ist, insbesondere eine Teilungsebene senkrecht zur Lagerdrehachse (6) im Bereich der Nut (4) aufweist.

13. Wälzlager nach einem der vorhergehenden Ansprüche, wobei zumindest ein Laufring (3) eine Teilungsebene aufweist, die zwischen dem Radiallager (7) und einem der Axiallager (8, 9) verläuft.

14. Windkraftanlage mit einem an einer Gondel drehbar gelagerten Rotor, an dem mehrere Rotorblätter jeweils um ihre Rotorblattlängsachse drehbar gelagert sind, wobei die Gondel um eine aufrechte Achse verdrehbar auf einem Turm gelagert ist, **dadurch gekennzeichnet, dass** zur drehbaren Lagerung der Gondel und/oder zur drehbaren Lagerung der Rotorblätter jeweils ein mittenfreies Großwälzlager vorgesehen ist, welches als Wälzlager gemäß einem der Ansprüche 1 bis 13 ausgebildet ist.

## Claims

1. Rolling bearing, in particular open-centre large rolling bearing, comprising two concentric bearing rings (2, 3), of which one bearing ring (3) has a groove (4) open towards the other bearing ring (2) and the other bearing ring (2) has a lug ring (5) engaging said groove (4), wherein the lug ring (5) is supported on the groove (4) by at least two axial bearings (8, 9) and at least one radial bearing (7), wherein said axial bearings (8, 9) are configured as roller bearings in the form of cylindrical roller and/or tapered bearings and are arranged in two mutually spaced planes extending perpendicularly to the bearing rotation axis (6), between which planes the at least one radial bearing (7) is arranged, wherein all radial bearings (7) are configured as ball bearings, **characterised in that** the at least one radial bearing (7) is mounted under radial bias of the ball races and the balls of the ball bearing.

2. Rolling bearing according to the preceding claim, wherein exactly two axial bearings (8, 9) and exactly one radial bearing (7) are provided.

3. Rolling bearing according to any one of the preceding claims, wherein a ball diameter of the radial bearing (7) is smaller than a roller diameter of the axial bearings (8, 9), wherein the ball diameter is about 30% to 85% or 40% to 60% of the roller diameter.

4. Rolling bearing according to any one of the preceding claims, wherein the at least one radial bearing (7) is arranged centrally between said two mutually spaced planes in which the two axial bearings (8, 9) are arranged.

5. Rolling bearing according to any one of the preceding claims, wherein the axial bearings (8, 9) are arranged on opposite end faces of the lug ring (5) and the radial bearing (7) is arranged on an outer lateral surface of the lug ring (5) between its end faces.

6. Rolling bearing according to any one of the preceding claims, wherein the axial bearings (8, 9) overlap each other when viewing the rolling bearing (1) in the direction of its bearing rotation axis (6), wherein said axial bearings (8, 9) in particular have equal raceway diameters.

7. Rolling bearing according to any one of the preceding claims, wherein the radial bearing (7) has a raceway diameter greater than or less than all the raceway diameters of the axial bearings (8, 9).

8. Rolling bearing according to any one of the preceding claims, wherein the axial bearings (8, 9) are configured identically to one another, in particular have rolling bodies of equal diameter and width.

9. Rolling bearing according to any one of the preceding claims, wherein the axial bearings (8, 9) are each configured in a single row as cylindrical roller bearings.

10. Rolling bearing according to any one of the preceding claims, wherein the radial bearing (7) is configured in a single row.

11. Rolling bearing according to any one of the preceding claims, wherein one of the bearing rings (2, 3) is configured with a toothing for engagement with a rotary drive pinion.

12. Rolling bearing according to any one of the preceding claims, wherein the bearing ring (3) comprising the groove (4) is configured to be divided, in particular has a dividing plane perpendicular to the bearing rotation axis (6) in the region of the groove (4).

13. Rolling bearing according to any one of the preceding claims, wherein at least one bearing ring (3) has a dividing plane extending between the radial bearing (7) and one of the axial bearings (8, 9).

14. Wind power plant comprising a rotor which is rotatably mounted on a nacelle and on which a plurality of rotor blades are each rotatably mounted about their rotor-blade longitudinal axis, wherein the nacelle is mounted on a tower so as to be rotatable about a vertical axis, **characterised in that**, for rotatably mounting the nacelle and/or for rotatably mounting the rotor blades, in each case an open-centre large rolling bearing is provided, which is configured as a rolling bearing according to any one of claims 1 to 13.

## Revendications

1. Palier à roulement, notamment palier à roulement de grande dimension sans centre, avec deux bagues de roulement concentriques (2, 3), dont une bague de roulement (3) possède une rainure (4) ouverte vers l'autre bague de roulement (2) et l'autre bague de roulement (2) possède une bague à talon (5) s'engageant dans ladite rainure (4), la bague à talon (5) étant supportée sur la rainure (4) par au moins deux paliers axiaux (8, 9) et au moins un palier radial (7), lesdits paliers axiaux (8, 9) étant configurés comme des paliers à rouleaux sous la forme de paliers à rouleaux cylindriques et/ou coniques et étant agencés dans deux plans espacés l'un de l'autre qui s'étendent perpendiculairement à l'axe de rotation de palier (6), entre lesquels plans est agencé l'au moins un palier radial (7), tous les paliers radiaux (7) étant configurés comme des paliers à billes, **caractérisé en ce que** l'au moins un palier radial (7) est monté sous précontrainte radiale des chemins de billes et des billes du palier à billes.

2. Palier à roulement selon la revendication précédente, dans lequel exactement deux paliers axiaux (8, 9) et exactement un palier radial (7) sont prévus.

3. Palier à roulement selon l'une quelconque des revendications précédentes, dans lequel un diamètre de bille du palier radial (7) est inférieur à un diamètre de rouleau des paliers axiaux (8, 9), le diamètre de bille représentant environ 30 % à 85 % ou 40 % à 60 % du diamètre de rouleau.

4. Palier à roulement selon l'une quelconque des revendications précédentes, dans lequel l'au moins un palier radial (7) est agencé au centre entre lesdits deux plans espacés l'un de l'autre dans lesquels sont agencés les deux paliers axiaux (8, 9).

5. Palier à roulement selon l'une quelconque des revendications précédentes, dans lequel les paliers axiaux (8, 9) sont agencés sur des côtés frontaux opposés de la bague à talon (5) et le palier radial (7) est agencé sur une surface d'enveloppe extérieure de la bague à talon (5) entre ses côtés frontaux.

6. Palier à roulement selon l'une quelconque des revendications précédentes, dans lequel les paliers axiaux (8, 9) se recouvrent mutuellement lorsque l'on considère le palier à roulement (1) dans la direction de son axe de rotation de palier (6), lesdits paliers axiaux (8, 9) possédant notamment des diamètres de chemin de roulement identiques.

7. Palier à roulement selon l'une quelconque des revendications précédentes, dans lequel le palier radial (7) possède un diamètre de chemin de roulement qui est supérieur ou inférieur à tous les diamètres de chemin de roulement des paliers axiaux (8, 9).

8. Palier à roulement selon l'une quelconque des revendications précédentes, dans lequel les paliers axiaux (8, 9) sont configurés de manière identique entre eux, notamment possèdent des corps de roulement de même diamètre et de même largeur.

9. Palier à roulement selon l'une quelconque des revendications précédentes, dans lequel les paliers axiaux (8, 9) sont chacun configurés en une rangée comme des paliers à rouleaux cylindriques.

10. Palier à roulement selon l'une quelconque des revendications précédentes, dans lequel le palier radial (7) est configuré en une rangée.

11. Palier à roulement selon l'une quelconque des revendications précédentes, dans lequel l'une des bagues de roulement (2, 3) est configurée avec une denture pour l'engagement avec un pignon d'entraînement rotatif.

12. Palier à roulement selon l'une quelconque des revendications précédentes, dans lequel la bague de roulement (3) présentant la rainure (4) est configurée sous forme divisée, notamment présente un plan de division perpendiculaire à l'axe de rotation de palier (6) dans la zone de la rainure (4).

13. Palier à roulement selon l'une quelconque des revendications précédentes, dans lequel au moins une bague de roulement (3) présente un plan de division qui s'étend entre le palier radial (7) et l'un des paliers axiaux (8, 9).

14. Éolienne avec un rotor monté rotatif sur une nacelle, sur lequel plusieurs pales de rotor sont montées rotatives chacune autour de leur axe longitudinal de pale de rotor, la nacelle étant montée rotative autour d'un axe vertical sur une tour, **caractérisée en ce qu'**il est prévu respectivement pour le montage rotatif de la nacelle et/ou pour le montage rotatif des pales de rotor un palier à roulement de grande dimension sans centre, qui est configuré comme un palier à roulement selon l'une quelconque des revendications 1 à 13.
